# EUROPÄISCHE PATENTSCHRIFT

(11) **EP 0 786 365 B1**
(45) Veröffentlichungstag und Bekanntmachung des Hinweises auf die Patenterteilung: **01.12.1999**
(21) Anmeldenummer: 97100422.1
(22) Anmeldetag: 13.01.1997
(51) Int. Cl.: B60K 7/00

(54) **Fahrwerk für Nutzfahrzeuge**
Chassis for utility vehicle
Châssis pour véhicule utilitaire

(30) Priorität: 24.01.1996 DE 29601177 U
(43) Veröffentlichungstag der Anmeldung: 30.07.1997
(73) Patentinhaber: SIEMENS AKTIENGESELLSCHAFT, 80333 München (DE)
(72) Erfinder: Pörschmann, Klaus-Peter, 91097 Oberreichenbach (DE)

(56) Entgegenhaltungen:
- DE-A- 4 108 647
- DE-C- 4 112 624
- GB-A- 151 035
- US-A- 4 057 121

## Beschreibung

Die Erfindung betrifft ein Fahrwerk für Nutzfahrzeuge.

Derartige Nutzfahrzeuge dienen als Stadtbusse zur Personenbeförderung. Bei diesen Stadtbussen wird ein niedriger Wagenboden gefordert, wobei im Türbereich die Wagenbodenhöhe nur 320 mm betragen soll, um beim Einsteigen nur eine Stufe überwinden zu müssen oder an einer Rampe oder einem höheren Bordstein eben einsteigen zu können. Im Idealfall soll der niedrige Wagenboden auf diesem Niveau durch den ganzen Bus geführt werden, insbesondere auch im Bereich der Hinterachse. Diese bei Schienenfahrzeugen bereits realisierte Forderung konnte bei Stadtbussen, die von einem Verbrennungsmotor angetrieben werden, bisher nicht erfüllt werden. Selbst bei Verwendung von sogenannten Portalachsen läßt sich der Übergang über der Hinterachse wegen der notwendigen Kardanwelle nicht vollständig absenken. Die Kardanwelle ist darüber hinaus als mechanisches Teil wartungsaufwendig und erzeugt Geräusche, die auf den Wagenkasten übertragen werden.

Weiterhin sind dieselelektrisch angetriebene Stadtbusse bekannt, bei denen die Elektromotoren als radnahe Motoren am Radsatz angeordnet sind. Bei den bekannten Fahrwerken werden aus wirtschaftlichen Gründen für die Radaufhängung Starrachsen verwendet. Durch diese Anordnung wird zwar ein durchgehend niedriger Wagenboden erreicht, der Durchgang zwischen den Radkästen beträgt jedoch nur ca. 480 mm und ist damit relativ schmal.

Durch die DE-PS 41 12 624 ist ein Fahrwerk für ein Nutzfahrzeug bekannt, bei dem ein Elektromotor exzentrisch zur Antriebswelle angeordnet ist. Die Motorachse und die Radsatzachse liegen damit zwar parallel, jedoch nicht auf gleicher Höhe. Mit den derzeit zur Verfügung stehenden Motorbauformen kann damit nur ein relativ schmaler Durchgang zwischen den Radkästen realisiert werden.

In der DE-PS 24 25 960 ist ein elektrisch angetriebener Rollstuhl beschrieben, dessen Antriebsanordnung nicht für schneller fahrende und erheblich schwerere Nutzfahrzeuge geeignet ist.

Ferner ist in der DE-OS 43 03 480 ein umrichtergespeister Asynchronmotor zum Antrieb von Kraftfahrzeugen bekannt, wobei die Anordnung des Motors im Kraftfahrzeug nicht offenbart ist.

Die US-PS 4 807 716 beschreibt einen elektromotorisch angetriebenen, handgesteuerten Hubwagen zum Transport von Gütern auf kürzesten Entfernungen, z. B. innerhalb von Lagerhallen. Die Kraftübertragung von beiden Elektromotoren zum jeweiligen Antriebsrad erfolgt über eine Antriebskette und ist damit für Dauerbetrieb und Langstreckenbetrieb mit hohen Lastwechseln nicht geeignet.

Weiterhin ist in der US-PS 1 481 405 ein Fahrwerk für ein Motorfahrzeug beschrieben, das eine Starrachse aufweist, die durchgehend in Höhe der Radnaben geführt ist und damit keine Niederflurbauweise des Motorfahrzeugs erlaubt. Beide an den Enden der Starrachse angeordneten Räder werden von jeweils einem Elektromotor angetrieben. Die Elektromotoren sind an der gefederten Masse des Chassis befestigt und über jeweils eine Kardanwelle mit dem Getriebesatz des jeweiligen Antriebsrades verbunden. Die Kardanwelle ist bei dem Fahrwerk gemäß der US-PS 1 481 405 notwendig, um den durch Einfederung des Motorfahrzeuges veränderlichen Ansteuerwinkel zu kompensieren. Durch die erforderliche Kardanwelle kann der Elektromotor nicht in Nähe der Achse montiert werden.

Die DE-PS 36 41 022 beschreibt einen Radantrieb, der für Hubstapler geeignet ist. Der jeweils in Radnähe exzentrisch zum Rad angeordnete Gleichstrom-Motor ist über eine Kegelrad-Getriebestufe mit dem betreffenden Rad gekoppelt. Die Realisierung dieses Antriebskonzeptes führt mit den derzeit zur Verfügung stehenden Motorbauformen zu einem relativ schmalen Durchgang zwischen den Radkästen.

Durch die DE-AS 1 227 783 ist eine Antriebsachse für Elektrofahrzeuge bekannt. Jedes Antriebsrad wird über ein Planetengetriebe von einem in der Radnabe angeordneten Gleichstrom-Motor angetrieben. Durch die Anordnung des Elektromotors in der Radnabe ist die Zugänglichkeit für Wartungsarbeiten erschwert.

In der GB-OS 2 102 360 ist wiederum ein elektrisch angetriebener, achsloser Rollstuhl beschrieben. Der Elektromotor ist über sein Getriebegehäuse am Rahmen des Rollstuhls befestigt. Auch diese Antriebsanordnung ist nicht für schneller fahrende und erheblich schwerere Nutzfahrzeuge geeignet.

Ferner ist durch die US-PS 1 543 044 ein Fahrwerk für ein Motorfahrzeug bekannt, das eine Starrachse aufweist, die durchgehend in Höhe der Radnaben geführt ist und damit keine Niederflurbauweise des Motorfahrzeugs erlaubt. Beide an den Enden der Starrachse angeordneten Räder werden von jeweils einem Elektromotor angetrieben. Die Elektromotoren sind an der gefederten Masse des Chassis befestigt und über jeweils eine verzahnte Welle mit dem Getriebesatz des jeweiligen Antriebsrades verbunden. Die verzahnte Welle ist bei dem Fahrwerk gemäß der US-PS 1 543 044 notwendig, um den durch Einfederung des Motorfahrzeugs veränderlichen Abstand zwischen Radachse und Motorwelle zu kompensieren. Der Elektromotor kann aufgrund der verzahnten Welle nicht in Nähe der Achse montiert werden.

Aufgabe der vorliegenden Erfindung ist es deshalb, ein Fahrwerk für ein Nutzfahrzeug zu schaffen, das auch im Bereich der Hinterachse einen breiten, niederflurigen Wagenboden aufweist, der auf dem gleichen Niveau verläuft wie der Niederfluranteil im Türbereich.

Die Aufgabe wird erfindungsgemäß durch die Merkmale im Anspruch 1 gelöst. Die vorteilhaften Ausgestaltungen der Erfindung sind in den weiteren Ansprüchen beschrieben.

Das Fahrwerk nach Anspruch 1 umfaßt eine Starrachse, die als Portalachse ausgebildet ist. An beiden Enden dieser Portalachse ist jeweils ein Rad drehbar gelagert, wobei jedes Rad von wenigstens einem im wesentlichen im rechten Winkel zur Portalachse angeordneten, radnahen elektrischen Fahrmotor angetrieben ist. Zwischen Fahrmotor und Felge des Rades ist ein Getriebe angeordnet. Weiterhin sind jeweils das Gehäuse des Fahrmotors und das Gehäuse des Getriebes kraftschlüssig miteinander verbunden und die Gehäuse der Getriebe kraftschlüssig an der Portalachse befestigt.

Unter dem Begriff "Rad" sind bei dem erfindungsgemäßen Fahrwerk nicht nur Einzelräder, sondern auch Radsätze zu verstehen, die eine Zwillingsbereifung aufweisen.

Der Begriff "im wesentlichen im rechten Winkel" soll hierbei auch Anordnungen umfassen, bei denen der Winkel zwischen Fahrmotor und Portalachse nicht genau 90 Grad beträgt.

Durch die Anordnung des elektrischen Fahrmotors in einem Winkel von etwa 90 Grad bzw. von genau 90 Grad ergibt sich im Bereich zwischen den Radkästen der Hinterachse ein relativ breiter, niederfluriger Anteil, der auf dem gleichen Niveau verläuft wie der Niederfluranteil im Türbereich.

Durch die Anordnung der elektrischen Fahrmotoren im rechten Winkel zur Portalachse sind die Fahrmotoren frei zugänglich, wodurch ein unproblematischer Einbau sowie ein problemloser Austausch der Fahrmotoren gewährleistet ist. Die Einbauräume für die elektrischen Fahrmotoren liegen hierbei nahe der Portalachse. Die Fahrmotoren sind vorzugsweise voll gekapselt und flüssigkeitsgekühlt. Dies macht sie unempfindlich gegen Verschmutzung in diesem Einbauort in Radnähe.

Das erfindungsgemäße Fahrwerk kann für alle Arten von elektrisch angetriebenen Nutzfahrzeugen eingesetzt werden. Hierzu zählen Nutzfahrzeuge, die von einer Oberleitung, einer Batterie, einem Verbrennungsmotor mit Generator, einem Schwungradspeicher oder einer Brennstoffzelle gespeist werden. In allen Fällen ist der Antriebsstrang mechanisch entkoppelt, wodurch eine Geräuschminderung erzielt wird. Weiterhin weist ein dieselelektrischer Antrieb gegenüber einem Dieselantrieb einen geringeren Verbrauch und niedrigere Emissionswerte auf, da der Dieselantrieb im optimalen Drehzahlbereich gehalten werden kann und die Drehzahlregelung über den elektrischen Fahrmotor stufenlos erfolgt.

Bei einer stehenden Anordnung der Fahrmotoren (Anspruch 3) sind diese besonders gut vor mechanischen Einwirkungen geschützt, da eventuell zwischen den Rädern auftretende Hindernisse - unabhängig von der Fahrtrichtung- nur die Portalachse berühren.

In das erfindungsgemäße Fahrwerk können prinzipiell alle elektrischen Fahrmotoren eingebaut werden. Besonders vorteilhaft ist es jedoch, als Fahrmotor eine Drehstrom-Asynchronmaschine mit Käfigläufer zu verwenden (Anspruch 4). Derartige Fahrmotoren sind einfach und robust aufgebaut und können kostengünstig gefertigt werden. Aufgrund ihrer Robustheit sind Drehstrom-Asynchronmotoren besonders gut für den Anbau an die Portalachse geeignet.

Weiterhin ist die Drehzahl einer Drehstrom-Asynchronmaschine frei wählbar und das Verhältnis von Durchmesser zur Länge variierbar. Das Feld der Drehstrom-Asynchronmaschine kann beliebig geschwächt werden, wodurch über den gesamten Drehzahlbereich eine optimale Drehmoment- bzw. optimale Leistungscharakteristik erzielt wird. Auf ein Schaltgetriebe, das zusätzlichen Einbauraum erfordert, kann damit verzichtet werden.

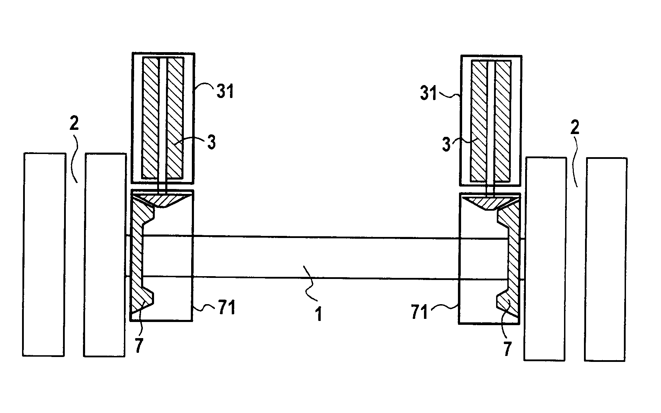

Die Erfindung sowie weitere vorteilhafte Ausgestaltungen, die Gegenstand der weiteren Ansprüche sind, werden im folgenden anhand eines schematisch dargestellten Ausführungsbeispiels in der Zeichnung naher erläutert.

Das in der Zeichnung dargestellte Fahrwerk umfaßt eine Portalachse 1, an deren beiden Enden jeweils ein Rad 2 drehbar gelagert ist. Die Räder 2 sind im dargestellten Ausführungsbeispiel als Radsätze mit Zwillingsbereifung ausgestaltet.

Beide Räder 2 werden von jeweils einem elektrischen Fahrmotor 3 angetrieben. Die erfindungsgemäß im wesentlichen rechtwinklig zur Portalachse angeordneten Fahrmotoren 3 sind im gezeigten Ausführungsbeispiel liegend angeordnet und liegen damit im wesentlichen auf gleicher Höhe mit der Portalachse 1. Der Übergang über die Portalachse 1 kann dadurch bis auf das Niveau des Niederfluranteils im Türbereich abgesenkt werden.

Die elektrischen Fahrmotoren 3 sind erfindungsgemäß als Getriebemotoren ausgebildet, wobei als Getriebe vorzugsweise Kronengetriebe eingesetzt werden, da diese besonders gut zur Untersetzung kleinbauender und damit hochdrehender Motoren geeignet sind. Jeder Fahrmotor 3 ist mit seinem Gehäuse 31 kraftschlüssig mit dem Gehäuse 71 seines Getriebes 7 verbunden. Weiterhin sind die Gehäuse 71 beider Getriebe 7 kraftschlüssig an der Portalachse 1 befestigt.

## Patentansprüche

1. Fahrwerk für Nutzfahrzeuge, das folgende Merkmale umfaßt:
- eine Starrachse, die als Portalachse (1) ausgebildet ist, wobei
- an beiden Enden der Portalachse (1) jeweils ein Rad (2) drehbar gelagert ist und
- jedes Rad (2) von wenigstens einem im wesentlichen im rechten Winkel zur Portalachse (1) angeordneten, radnahen elektrischen Fahrmotor (3) angetrieben ist, wobei
- zwischen Fahrmotor (3) und Felge des Rades (2) jeweils ein Getriebe (7) angeordnet ist und
- Gehäuse (31) des Fahrmotors (3) und Gehäuse (71) des Getriebes (7) kraftschlüssig miteinander verbunden sind und die Gehäuse (71) der Getriebe (7) kraftschlüssig an der Portalachse (1) befestigt sind.

2. Fahrwerk nach Anspruch 1, wobei der Fahrmotor (3) im wesentlichen auf gleicher Höhe mit der Portalachse (1) angeordnet ist.

3. Fahrwerk nach Anspruch 1, wobei der Fahrmotor (3) stehend angeordnet ist.

4. Fahrwerk nach Anspruch 1, wobei der Fahrmotor (3) als Drehstrom-Asynchronmaschine mit Käfigläufer ausgebildet ist.

## Claims

1. Chassis for commercial vehicles, which includes the following features:
- a rigid axle, which is constructed as a portal axle (1), with
- a respective wheel (2) being rotatably mounted at each end of the portal axle (1), and
- each wheel (2) being driven by at least one electric driving motor (3) which is arranged substantially at right angles to the portal axle (1) and close to the wheel, with
- a respective gear unit (7) being arranged between the driving motor (3) and the rim of the wheel (2), and
- the housing (31) of the driving motor (3) and the housing (71) of the gear unit (7) being connected to each other in a friction-locked manner and the housing (71) of the gear unit (7) being mounted in a friction-locked manner on the portal axle (1).

2. Chassis according to claim 1, wherein the driving motor (3) is arranged at substantially the same height as the portal axle (1).

3. Chassis according to claim 1, wherein the driving motor (3) is arranged vertically.

4. Chassis according to claim 1, wherein the driving motor (3) is constructed as a three-phase asynchronous machine with a cage rotor.

## Revendications

1. Châssis pour véhicules utilitaires, englobant les caractéristiques suivantes :
- un essieu rigide réalisé en tant qu'essieu (1) en portique, sachant
- qu'une roue (2) est respectivement montée à rotation aux deux extrémités de l'essieu (1) en portique, et
- que chaque roue (2) est entraînée par au moins un moteur électrique de déplacement (3), proche de ladite roue et monté sensiblement à angle droit par rapport à l'essieu (1) en portique,
- une transmission (7) étant respectivement interposée entre le moteur de déplacement (3) et la jante de la roue (2), et
- le carter (31) du moteur de déplacement (3) et le carter (71) de la transmission (7) sont reliés mécaniquement l'un à l'autre, et les carters (71) des transmissions (7) sont fixés mécaniquement à l'essieu (1) en portique.

2. Châssis selon la revendication 1, dans lequel le moteur de déplacement (3) se trouve sensiblement à la même hauteur que l'essieu (1) en portique.

3. Châssis selon la revendication 1, dans lequel le moteur de déplacement (3) occupe une position verticale.

4. Châssis selon la revendication 1, dans lequel le moteur de déplacement (3) est réalisé sous la forme d'une machine asynchrone à courant triphasé, munie d'un rotor encagé.
